# EUROPEAN PATENT SPECIFICATION

(11) **EP 1 742 872 B1**
(45) Date of publication and mention of the grant of the patent: **30.04.2008**
(21) Application number: 05716855.1
(22) Date of filing: 01.03.2005
(51) Int. Cl.: C01B 33/107

(54) **PROCESS FOR PREPARING HSiCl3 BY CATALYTIC HYDRODEHALOGENATION OF SiCl4**
VERFAHREN ZUR HERSTELLUNG VON HSICL3 DURCH KATALYTISCHE HYDRODEHALOGENIERUNG VON SICL4
PROCEDE DE PREPARATION DE HSiCI3 PAR HYDRODESHALOGENATION CATALYTIQUE DE SiCI4

(30) Priority: 23.04.2004 DE 102004019759
(43) Date of publication of application: 17.01.2007
(73) Proprietor: Evonik Degussa GmbH, 40474 Düsseldorf (DE)
(72) Inventor: BOHMHAMMEL, Klaus, 09599 Freiberg (DE); KÖTHER, Sven, 09599 Freiberg (DE); ROEWER, Gerhard, 09599 Freiberg (DE); RÖVER, Ingo, 09599 Freiberg (DE); MONKIEWICZ, Jaroslaw, 79618 Rheinfelden (DE); HÖNE, Hans-Jürgen, 61231 Bad Nauheim (DE)
(86) International application number: PCT/EP2005/050882
(87) International publication number: WO 2005/102927

(56) References cited:
- DE-A1- 4 108 614
- DATABASE WPI Section Ch, Week 198921 Derwent Publications Ltd., London, GB; Class E36, AN 1989-156694 XP002329082 & JP 01 100011 A (CHIYODA CHEM ENG CONSTR CO) 18 April 1989 (1989-04-18)

## Description

The invention relates to a process for preparing trichlorosilan (HSiCl₃) by catalytic hydrodehalogenation of silicon tetrachloride (SiCl₄) in the presence of hydrogen.

SiCl₄ and HSiCl₃ are formed together in many industrial processes in silicon chemistry. It is therefore necessary to convert these two products into one another and thus meet the respective demand for one of the products.

Furthermore, high-purity HSiCl₃ is an important starting material in the production of solar silicon.

Various catalysts and the process for converting SiCl₄ to HSiCl₃ in the presence of hydrogen have been known for a long time.

Thus, EP 0 658 359 A2, for example, discloses a process for the catalytic hydrodehalogenation of SiCl₄ to HSiCl₃ in the presence of hydrogen, in which finely divided transition metals or transition metal compounds selected from the group consisting of nickel, copper, iron, cobalt, molybdenum, palladium, platinum, rhenium, cerium and lanthanum are used as unsupported catalysts, these are able to form silicides with elemental silicon or silicon compounds. Problems are, as a result of the strongly endothermic nature of the reaction, the indirect introduction of the heat of reaction and the sintering of the catalyst particles, associated with a drop in activity. In addition, separation of the used finely divided catalysts from the product mixture represents a considerable expense.

It is an object of the present invention to provide a further possible way of producing HSiCl₃ by catalytic hydrodehalogenation of SiCl₄.

According to the invention, this object is achieved as set forth in the claims.

It has surprisingly been found that a degree of conversion [conv. = 100 % · c(HSiCl₃)/cₒ(SiCl₄)] in the vicinity of the thermodynamic conversion can be achieved in a simple and economical way when an SiCl₄/H₂ mixture is passed over a metal or metal salt which is based on at least one element of main group 2 of the Periodic Table of the Elements and forms stable metal chlorides under the reaction conditions and this catalytic reaction is appropriately carried out at a temperature of from 300 to 1 000°C, preferably from 600 to 950°C, in particular from 700 to 900°C. The use of a metal component selected from the group consisting of Ca, Ba and Sr and their salts is particularly advantageous. The catalytically active system can also have been applied to a support. Preference is in this case given to stable microporous supports, but, for example, not exclusively those based on SiO₂, in particular low-aluminum zeolites or leached glass. The metal content on the support is advantageously from 0.1 to 10% by weight. For example, the present process can advantageously be carried out in a heatable fixed-bed reactor or moving-bed reactor, but also in a heatable fluidized-bed reactor. HSiCl₃ can be isolated from the resulting gaseous product mixture by targeted, i.e. at least partial, condensation. However, the gaseous product mixture can also be used further directly, for example in an esterification process with an alcohol, in a hydrosilylation, in the preparation of pyrogenic silica, in the preparation of monosilane or solar silicon, to name only a few examples.

In particular, the present process avoids toxic heavy metals as catalysts component and reduces sintering of the catalyst, and achieves a relatively high mechanical strength.

In addition, the catalyst systems used according to the invention generally display an above-average stability in respect of deactivation.

The present invention accordingly provides a process for preparing HSiCl₃ by catalytic hydrodehalogenation of SiCl₄ in the presence of hydrogen, in which at least one metal or metal salt selected from among the elements of the main group 2 of the Periodic Table of the Elements (PTE) is used as catalyst at a temperature in the range from 300 to 1 000°C.

Preference is given to using calcium, strontium, barium, calcium chloride, strontium chloride, barium chloride or mixtures of at least two of the abovementioned components as catalyst in the process of the invention.

This catalyst can be used as such, for example in a piece or from coarsely crystalline to pulverant as salt having a preferred average particle diameter of from 0.01 to 3 mm, in particular a d₅₀ of from 0.05 to 3 mm, as determined by methods known per se, or as supported catalyst.

It can be advantageous to use the catalyst applied to a support from the group consisting of low-aluminum zeolites, leached glass, for example fused silica, activated carbon, porous siliceous supports or SiO₂ supports.

Such a supported catalyst system is appropriately based on a microporous support having a poor volume of from 100 to 1 000 mm³/g and a BET surface area of from 10 to 500 m²/g, preferably from 50 to 400 m²/g. The pore volume and the BET surface area can be determined by methods known per se. The support can have the support forms known per se, for example powder, granules, tablets, pellets, extradites, trilobes, spheres, beads, tubes, cylinders, plates, honeycombs, to name only a few examples. Such supports preferably have a geometric surface area of from 100 to 2 000 m²/m³ or a bulk density of from 0.1 to 2 kg/l, preferably from 0.2 to 1 kg/l.

The catalytically active material can be applied to such a support in a manner known per se; for example, it is possible to dissolve a metal salt in a suitable solvent, impregnate the support with the solution by dipping or spraying, dry it and, if appropriate, subject to a thermal after-treatment. As solvent, it is possible to use, for example, water, aqueous solutions or alcohols, and it is possible to use salts which on subsequent thermal treatment of the impregnated support, if appropriate in the presence of H₂ and/or HCl, forms stable alkaline earth metal chlorides. Nonlimiting examples of salts which can be used are alkaline earth metal chlorides, alkaline earth metal hydroxides, alkaline earth metal carbonates and alkaline earth metal nitrides. The ready-to-use supported catalyst should appropriately be free of water and oxygen and also not liberate these substances on heating. A supported alkaline earth metal catalyst can be obtained, for example under protective gas, by bringing a support into contact with molten alkaline earth metal and subsequently cooling it. Application of the metal to the support can be carried out under reduced pressure, so that the molten metal can also penetrate into the pore system of the support after the pressure is increased. When such metal catalysts are employed in the process of the invention, they are generally converted into the corresponding stable, catalytically active chloride under the reaction conditions.

The supported catalysts used in the process of the invention preferably have a catalyst content, calculated as element, of from 0.1 to 10% by weight. Particular preference is given to catalyst contents of from 1 to 8% by weight, based on the supported catalyst.

In the process of the invention, it is advantageous to bring an SiCl₄/H₂ mixture having a molar ratio of from 1:0.9 to 1:20 into contact with the catalyst. Particular preference is given to using SiCl₄/H₂ mixtures having a molar ratio of from 1:1 to 1:10, very particularly preferably from 1:1.5 to 1:8, in particular those having a molar ratio of from 1:2 to 1:4. Last but not least, the SiCl₄ used here and the hydrogen, generally of high to very high quality, must be free of hydrogen or hydrogen compounds for safety reasons.

In the process of the invention, the reaction is preferably carried out in a fixed-bed reactor or in a fluidized-bed reactor or a moving-bed reactor.

It is appropriate to use a reactor whose walls or interior surfaces of the walls comprise a heat-resistant glass, in particular fused silica, a heat-resistant glaze or a heat-resistant ceramic or specialist ceramic. Furthermore, the materials used for the reactor should be largely chemically resistant toward the components present in the process of the invention.

The catalytic reaction of the invention is preferably carried out at a temperature in the range from 600 to 950°C, particularly preferably from 700 to 900°C, and a pressure of from 0.1 to 100 bar abs., preferably from 1 to 10 bar abs., in particular from 1.5 to 2.5 bar abs.

To carry out the reaction of the invention, the preset process is appropriately operated at a space velocity (SV = volume flow/catalyst volume) of from 2 000 to 30 000 h⁻¹, preferably from 5 000 to 15 000 h⁻¹. The gas mixture in the reactor appropriately has a linear velocity (LV = volume of flow/cross-sectional area of the reactor) of from 0.01 to 10 m/s, preferably from 0.02 to 8 m/s, particularly preferably from 0.03 to 5 m/s. The volume flows on which the reaction-kinetic parameters mentioned above and below are based are in each case at STP. In process engineering terms, the reaction of the invention is appropriately carried out in the turbulent range.

### In general, the process of the invention is carried out as follows:

A heatable reactor which is largely resistant to elevated temperatures and chlorosilanes or HCl is generally firstly dried, for example by baking, filled with dry, O₂-free protective gas, for example argon or nitrogen, and charged with catalyst under protective gas. The catalyst is generally preconditioned in a stream of H₂ at elevated temperatures up to the reaction temperature. However, the catalyst can also be preconditioned under an atmosphere or stream of HSiCl₃, SiCl₄, H₂/HSiCl₃, H₂/SiCl₄ or H₂/HSiCl₃/SiCl₄. Preconditioning of the catalyst is appropriately carried out for from 0.1 to 12 hours, preferably from 2 to 6 hours, at a temperature above 300°C. If an alkaline earth metal as such is used as catalyst, the preconditioning under said conditions can be carried out by heating it over a period of from about 0.5 to 4 hours to a temperature below the melting point of the alkaline earth metal used and keeping it at this temperature for from about 1 to 10 hours. The temperature can then be increased to the desired operating temperature and the process of the invention can be carried out, with the respective catalyst particles generally retaining their original shape. The reactor can appropriately be monitored under operating conditions by means of at least one thermocouple and at least one flow measurement device.

To prepare a feed mixture, it is possible to convert SiCl₄ into the gas phase, add the appropriate proportions of hydrogen and feed it to the reactor which is at operating temperature.

The product mixture obtained at the outflow end can be used directly as feed stream in a further process or can be worked up to isolate HSiCl₃, for example by condensation. Amounts of hydrogen or SiCl₄ obtained in this way can advantageously be recycled. The product stream from the outlet end of the reactor, i.e. before further utilization or work-up, can also be conveyed in countercurrent through a heat exchanger at the inlet end of the reactor in order to preheat the feed stream before it enters the reactor and thus to make an advantageous energy saving.

However, the catalyst can also be used in the form of a fluidized bed, in which case a cyclone is appropriately located at the outlet end of the reactor to separate off the catalyst or supported catalyst. The catalyst collected in this way can advantageously be recirculated to the reactor.

In the process of the invention, the reaction product obtained, i.e. product mixture, can be worked up or processed further. Preference is given to (i) fractionally or at least partially condensing the product mixture in a manner known per se, isolating liquid, advantageously highly pure HSiCl₃ and recirculating any hydrogen or silicon tetrachloride obtained to the feed stream to the present process or (ii) advantageously passing the product stream as starting material to a direct further use.

The present invention is illustrated by the following examples without being restricted thereby.

### Examples:

### Example 1

ZSM 5 is impregnated with a 0.1 N BaCl₂ solution, subsequently dried and ignited at 450°C under a hydrogen atmosphere for 1 hour. 10% by weight of salt is applied in this way.

In a fused silica reactor having a diameter of 15 mm and a length of 250 mm, 1.3 g of this zeolite containing metal salt are installed on a frit. Heating is effected electrically by means of a tube furnace to 845°C. An H₂/SiCl₄ mixture flows through the reactor at a throughput of 7 l/h. The conversion achieved in the reaction is monitored by gas chromatography. Table 1 reports the degree of conversion of SiCl₄ into HSiCl₃ at various molar ratios of n(H₂)/n(SiCl₄).

**Table 1**

| (H₂)/n(SiCl₄) | Degree of conversion n into HSiCl₃ (%) |
|---|---|
| 4 | 17.4 |
| 5 | 19.2 |
| 6 | 20.7 |
| 8 | 23.2 |

### Example 2

The fused silica reactor described in example 1 is used. 1 g of metallic barium having a mean particle diameter 1.5 mm is used as solid and is preconditioned (H₂/HSiCl₃ atmosphere, heating at 700°C for 2 hours, hold at 700°C for 2 hours (presumably the formation of Ba/BaSiₓ/BaCl₂/Si phases), heating to operating temperature). The degrees of conversion are determined as a function of the reaction temperature at a volume flow of 7 l/h and a constant n(H₂)/n(SiCl₄) ratio of 6:1.

**Table 2**

| Temperature (°C) | Degree of conversion of HSiCl₃ (%) |
|---|---|
| 800 | 13.8 |
| 825 | 17.9 |
| 845 | 21.8 |

### Example 3

The fused silica reactor described in example 1 is used. 1 g of anhydrous SrCl₂ having a mean diameter of 0.7 mm is used as solid. The degrees of conversion are determined as a function of the reaction temperature at a volume flow of 7 l/h and a constant n(H₂)/n(SiCl₄) ratio of 6:1.

**Table 3**

| Temperature (°C) | Degree of conversion of HSiCl₃ (%) |
|---|---|
| 800 | 15.4 |
| 825 | 17.2 |
| 845 | 19.2 |

## Claims

1. A process for preparing trichlorosilan (HSiCl₃) by catalytic hydrodehalogenation of silicon tetrachloride (SiCl₄) in the presence of hydrogen, in which at least one metal or metal salt selected from among the elements of main group 2 of the Periodic Table of the Elements is used as catalyst at a temperature in the range from 300 to 1 000°C.

2. The process as claimed in claim 1,
wherein
calcium, strontium, barium, calcium chloride, strontium chloride, barium chloride or a mixture of at least two of the abovementioned components is used as catalyst.

3. The process as claimed in claim 1 or 2,
wherein
a supported catalyst is used.

4. The process as claimed in any of claims 1 to 3,
wherein
a catalyst which has been applied to a support selected from the group consisting of low-aluminum zeolites, leached glass, fused silica, activated carbon, porous siliceous supports or SiO₂ supports is used.

5. The process as claimed in any of claims 1 to 4,
wherein
the supported catalyst used has a catalyst content, calculated as element, of from 0.1 to 10% by weight.

6. The process as claimed in any of claims 1 to 5,
wherein
an SiCl₄/H₂ mixture having a molar ratio of from 1:0.9 to 1:20 is brought into contact with the catalyst.

7. The process as claimed in any of claims 1 to 6,
wherein
the reaction is carried out in a fixed-bed reactor, in a fluidized-bed reactor or in a moving-bed reactor.

8. The process as claimed in any of claims 1 to 7,
wherein
the catalytic reaction is carried out at a temperature in the range from 600 to 950°C and a pressure of from 0.1 to 100 bar abs.

9. The process as claimed in any of claims 1 to 8,
wherein
the reaction is carried out at a space velocity of from 2 000 to 30 000 h⁻¹ and the gas stream has a linear velocity of from 0.01 to 10 m/s in the reactor.

10. The process as claimed in any of claims 1 to 9,
wherein
HSiCl₃ is isolated from the product mixture or the product mixture is used further directly.

## Patentansprüche

1. Verfahren zur Herstellung von Trichlorsilan (HSiCl₃) durch katalytische Hydrodehalogenierung von Siliciumtetrachlorid (SiCl₄) in Gegenwart von Wasserstoff,
indem man bei einer Temperatur im Bereich von 300 bis 1 000 °C als Katalysator mindestens ein Metall oder Metallsalz aus der Reihe der Elemente der 2. Hauptgruppe des Periodensystems der Elemente einsetzt.

2. Verfahren nach Anspruch 1,
**dadurch gekennzeichnet,**
**dass** man als Katalysator Kalzium, Strontium, Barium, Kalziumchlorid, Strontiumchlorid, Bariumchlorid oder Mischungen aus mindestens zwei der zuvor genannten Komponenten einsetzt.

3. Verfahren nach Anspruch 1 oder 2,
**dadurch gekennzeichnet,**
**dass** man einen geträgerten Katalysator einsetzt.

4. Verfahren nach einem der Ansprüche 1 bis 3,
**dadurch gekennzeichnet,**
**dass** man einen Katalysator einsetzt, der auf einem Träger aus der Reihe aluminiumarme Zeolithe, ausgelaugtes Glas, Quarzglas, Aktivkohle, poröser silikatischer Träger oder SiO₂-Träger aufgebracht ist.

5. Verfahren nach einem der Ansprüche 1 bis 4,
**dadurch gekennzeichnet,**
**dass** der eingesetzte Trägerkatalysator einen Gehalt an Katalysator, gerechnet als Element, von 0,1 bis 10 Gew.-% aufweist.

6. Verfahren nach einem der Ansprüche 1 bis 5,
**dadurch gekennzeichnet,**
**dass** man ein SiCl₄/H₂-Gemisch mit einem Molverhältnis von 1 : 0,9 bis 1 : 20 mit dem Katalysator in Kontakt bringt.

7. Verfahren nach einem der Ansprüche 1 bis 6,
**dadurch gekennzeichnet,**
**dass** man die Umsetzung in einem Festbettreaktor, in einem Wirbelschichtreaktor oder Fließbettreaktor durchführt.

8. Verfahren nach einem der Ansprüche 1 bis 7,
**dadurch gekennzeichnet,**
**dass** man die katalytische Umsetzung bei einer Temperatur im Bereich von 600 bis 950 °C und einem Druck von 0,1 bis 100 bar abs. durchführt.

9. Verfahren nach einem der Ansprüche 1 bis 8,
**dadurch gekennzeichnet,**
**dass** man die Umsetzung bei einer Raumgeschwindigkeit von 2 000 bis 30 000 h⁻¹ durchführt und der Gasstrom im Reaktor eine Lineargeschwindigkeit von 0,01 bis 10 m/s aufweist.

10. Verfahren nach einem der Ansprüche 1 bis 9,
**dadurch gekennzeichnet**
**dass** man HSiCl₃ aus dem Produktgemisch gewinnt oder das Produktgemisch direkt weiter verwertet.

## Revendications

1. Procédé pour la préparation de trichlorosilane (HSiCl₃) par hydrodéshalogénation catalytique de tétrachlorure de silicium (SiCl₄) en présence d'hydrogène, dans lequel on utilise au moins un métal ou un sel de métal, choisi parmi les éléments du groupe principal 2 du tableau périodique des éléments, comme catalyseur à une température dans la plage de 300 à 1000 °C.

2. Procédé selon la revendication 1, dans lequel on utilise du calcium, du strontium, du baryum, du chlorure de calcium, du chlorure de strontium, du chlorure de baryum ou un mélange d'au moins deux des composants mentionnés ci-dessus, comme catalyseur.

3. Procédé selon la revendication 1 ou 2, dans lequel on utilise un catalyseur supporté.

4. Procédé selon l'une quelconque des revendications 1 à 3, dans lequel on utilise un catalyseur qui a été appliqué sur un support sélectionné dans le groupe constitué des zéolites à faible teneur en aluminium, du verre lixivié, de la silice fondue, du charbon actif, des supports siliceux poreux ou des supports de SiO₂.

5. Procédé selon l'une quelconque des revendications 1 à 4, dans lequel le catalyseur supporté utilisé présente une teneur en catalyseur, calculée comme élément, de 0,1 à 10 % en poids.

6. Procédé selon l'une quelconque des revendications 1 à 5, dans lequel on met un mélange de SiCl₄/H₂, dans un rapport molaire de 1:0,9 à 1:20, en contact avec le catalyseur.

7. Procédé selon l'une quelconque des revendications 1 à 6, dans lequel la réaction est effectuée dans un réacteur à lit fixe, dans un réacteur à lit fluidisé ou dans un réacteur à lit mobile.

8. Procédé selon l'une quelconque des revendications 1 à 7, dans lequel la réaction catalytique est effectuée à une température dans la plage de 600 à 950 °C et sous une pression de 0,1 à 100 bars absolus (abs).

9. Procédé selon l'une quelconque des revendications 1 à 8, dans lequel la réaction est effectuée à une vitesse spatiale de 2000 à 30 000 h⁻¹ et le courant de gaz a une vitesse linéaire de 0,01 à 10 m/s dans le réacteur.

10. Procédé selon l'une quelconque des revendications 1 à 9, dans lequel on isole le HSiCl₃ du mélange de produits ou on utilise directement le mélange de produits.
